Europäisches Patentamt

(19) European Patent Office

Office européen des brevets

(11) Publication number: **0 263 615 B1**

(12) **EUROPEAN PATENT SPECIFICATION**

(45) Date of publication of patent specification: **29.04.92**  (51) Int. Cl.⁵: **A01K 73/10**

(21) Application number: **87308363.8**

(22) Date of filing: **22.09.87**

(54) **A device for use in a fishing trawl.**

(30) Priority: **29.09.86 GB 8623398**

(43) Date of publication of application:
**13.04.88 Bulletin  88/15**

(45) Publication of the grant of the patent:
**29.04.92 Bulletin  92/18**

(84) Designated Contracting States:
**BE DE ES FR GB GR IT NL SE**

(56) References cited:
**DE-A- 2 919 972**
**DE-C- 904 957**
**GB-A- 1 337 079**
**GB-A- 1 343 806**

(73) Proprietor: **SALUBRE INVESTMENTS LIMITED**
**Capwell Works Kinsale Road**
**Cork(IE)**

(72) Inventor: **Burns, David**
**Kinvara, 12 Grange Erin**
**Douglas, Cork(IE)**

(74) Representative: **Godsill, John Kenneth et al**
**Haseltine Lake & Co. Hazlitt House 28 South-**
**ampton Buildings Chancery Lane**
**London WC2A 1AT(GB)**

## Description

This invention relates to devices for use attached to a fishing trawl net, and in particular to devices for indicating when a quantity of fish has been caught in a trawl net and/or the shape of the net during the trawl operation.

A fishing vessel which tows a net is described as a "trawler" or "dragger" (N. America). The trawl net consists of a narrow cod end and a large net opening or "mouth". The upper edge of the net mouth is attached to a headrope (or headline) and the lower edge has a corresponding footrope or (foot-line). The net is connected by wire ropes (bridles) to the towing cables "warps" by means of trawl "doors" or otter boards. The mouth is kept open with these otter boards and with floats attached to the headrope and weights attached to the footrope (or towing warps). The warps, doors, bridles, floats, weights and net and associated connections together make up the net "gear".

The important data defining the condition of the net for the fisherman are the shape and size of the mouth of the net and the shape of the net meshes. This data defines the condition of the net.

The trawling operation involves the setting or "shooting" of the net, a period of towing and the recovery or "hauling" of the net. The total operation is known as a "tow".

A tow by a fishing trawler may take several hours and be carried out over many kilometres. In areas where there are underwater hazards such as rocks or wrecks on which the net could snag and tear, fishermen trawl along tracks of ground known to be safe. At the end of a tow, the net is hauled in and, if there is a significant quantity of fish in the net, the crew of the trawler then has to try to assess at which point during the tow the fish were caught. While experienced fishermen have a fairly good idea of the preferred habitats and environmental conditions of the target species, it is usually the case that concentrations of fish are very specific to small areas of ground which may be unevenly distributed over a large (generally suitable) area. It has been discovered that a large proportion of the netted fish may have been netted at one or two localised regions during the tow. It is advantageous to be able to return directly to a specific region or location at which a good quantity of fish was netted to obviate the need to repeat the whole tow including the unproductive areas.

One crude method of identifying these locations is to assess what is the condition of the catch when the net is hauled. If a large proportion of the fish caught is lively, then it can be assumed that they were netted towards the end of the tow. If a large proportion is not lively, then it can be assumed that they were netted towards the beginning of the tow.

In addition to the time and fuel costs of trawling after the net has been filled, the fish can be damaged and reduced in value as a result of such operations.

A more accurate method is to use the difference in warp tension to detect the catch, as directly measured by meter readouts or simply by the increased drag resistance of the filled net as it affects the motion of the trawler and/or the increased engine revolutions needed to maintain a constant speed. Such indicators may be unreliable where they are based on subjective impressions and expensive as when load cells are used for measuring the warp tension.

Devices such as echo sounders, fish finders and sonar mounted on the trawler hull can be used to detect the location and density of a fish shoal under or ahead of the vessel but these fish may or may not be caught in the net which is towed at some distance behind the trawler. Devices are also available which attempt to identify the times and locations of the catch during the tow using remote sensing of the filling of the net. The relevant information is acquired by detecting the deformation of the distal end of the net under the stress of the fish caught therein or by remote hydroacoustic sensing of the presence of fish in the mouth of the net. Information from these various sensors is then transmitted to the trawler in real time by means of coded digitized hydroacoustic signals or by direct cable link from the net to the trawler. Such net monitors and catch control systems include those manufactured by Scanmar, Furuno and Simrad (all Registered Trademarks). Another device which is fixed to a net and is coupled to the trawling vessel is disclosed in DE-A-2919972. The device has several sensors. Each sensor is connected via a common cable to a sweep generator.

In addition to the time (and location) of the filling of the net and the distortion of the cod end, fishermen need to know the "set" of the net. This term describes the general configuration of the net during the tow. For a trawl net the set is defined firstly in terms of the spread of the net opening horizontally as measured between its trawl doors, across the bridles, or between two opposing points of the fishing gear, and secondly by height of the headrope above the sea bed or above the footrope. These dimensions are strongly influenced by modifications to the attachments of the trawl cables to the doors of the net, by the fitting of floats to the headrope and/or weights to the footrope, by the length (or tension) of the bridles, and also by the speed of the net through the water. It has been noted by the inventor that it is normal that a net reaches an equilibrium state during a tow when the fishing vessel is at a reasonably constant speed so that the set is relatively constant.

Midwater trawling (for pelagic fish) also requires information on the set of the net in terms of its configuration, i.e. the spread, and the vertical distance from headrope to footrope, instead of headrope above the seabed as in bottom trawling.

A satisfactory steady state of the net is essential to efficient fishing. Sophisticated remote net monitoring systems, as previously mentioned, are also deployed to acquire data on the set and transmit it in real time. These systems usually involve acoustic transducers (and receivers) fitted to the headrope and the net gear to sense the dimensions required to characterise the set. However, the transmission of this data in real time (and its subsequent display) is difficult and costly.

The known net monitors and catch control systems are vulnerable to damage by rough handling or by water, and more importantly, they involve the need for sophisticated equipment to transmit and receive data, which, at least for remote transmitters and receivers, requires the trawler to be suitably equipped with complex and expensive signal receiving and processing circuitry.

The cableless systems are also subject to problems of interference and the difficulty of ensuring correct alignment of the transmitting and receiving transducers. Use of a direct cable link may reduce the complexity of the real time data link but the cable itself is also vulnerable and expensive, requiring its own special winch. These reasons, coupled with the expense, mean that such systems are used only by larger vessels, generally those in excess of 100 Gross Registered Tons.

While the fisherman would prefer to have continuous data available to him on the set of the net, the problems and expense associated with the known equipment mean that it is often not used in smaller vessels. The inventor has noted that the fundamental requirement is the knowledge that the fishing gear is not fouled or incorrectly adjusted and that a satisfactory equilibrium set of the net has been achieved.

GB-A-1337079 discloses a device having net configuration sensing means and time recording means which are activated by a third parameter. The device is thus switched on when the device is subjected to a predetermined pressure and switched off when the pressure decreases below that predetermined level. The device measures the pressure difference between two vertically spaced apart locations on the trawl net. Data is accessed when the device is retrieved.

According to one aspect of the present invention, there is provided a device for use underwater attached to a trawl net, the device comprising net configuration sensing means for providing data relating to a value of a net configuration characteristic, time-measuring means for measuring the passage of time, the device being operable such that one of said net configuration data and measured time is stored for access only on subsequent retrieval of the device from the water when the net is hauled, characterised in that the net configuration sensing means is operable to produce a control signal in dependence upon the attainment of a predetermined value of said net configuration characteristic, said control signal being operable to change the state of the time-measuring means so that the time of occurrence of said predetermined value of said net configuration characteristic can be obtained from said device on retrieval.

According to a second aspect of the present invention there is provided a device for use underwater attached to a trawl net, the device comprising net spread sensing means for providing data defining a net spread, time-measuring means for measuring the passage of time, the device being operable such that said net spread data is stored for access only on subsequent retrieval of the device from the water when the net is hauled, characterised in that the time-measuring means is operable to produce a control signal in dependence upon the attainment of a predetermined time, said control signal initiating a discrete net spread measuring operation of the sensing means and the storage of data defining the net spread thus measured.

According to a third aspect of the invention there is provided a method of monitoring a fishing trawl, the method comprising utilizing a device comprising net spread sensing means for providing data defining net spread and time-measuring means for measuring the passage of time, storing said net spread data at the device, and accessing the stored data only on retrieval of the device from the water when the net is hauled, characterised by the time-measuring means producing a control signal in dependence upon the attainment of a predetermined time, said control signal initiating a discrete net spread measuring operation of the sensing means and the storage of data defining the net spread thus measured.

According to a fourth aspect of hte invention there is provided a method of monitoring a fishing trawl, the method comprising utilizing a device comprising net configuration sensing means for providing data relating to value of a net configuration characteristic and time-measuring means for measuring the passage of time, storing one of said net configuration data and measured time at the device, and accessing the stored data only on retrieval of the device from the water when the net is hauled, characterised by the net configuration sensing means producing a control signal in dependence upon the attainment of a predetermined value of said net configuration characteristic, said control signal changing the state of the time-measuring means so that the time of occurrence of said predetermined value of said net configuration can be obtained from said device on retrieval.

These aspects of the invention adopt the principle of using a timer to monitor and acquire data on the condition of the net. The use of a retrievable timer together with net condition monitors allows the fishermen to obtain delayed information at the end of the tow with greatly reduced complexity and at lower cost than equivalent real time systems.

According to one embodiment of the present invention the net condition is indicative that a trawl net has been filled with fish to a predetermined extent. Hence the device comprises means for generating a control signal to indicate that part of a trawl net has been filled with fish to a predetermined extent; and the means for measuring the passage of time coupled to receive the control signal has means for storing an indication of the time at which the control signal was received.

Preferably the indicating means is a display for displaying the duration from a starting time up to the time when the control signal is received. Alternatively, it may display the time elapsed since receipt of the control signal.

Generation of the control signal preferably occurs when a significant quantity of fish has been caught in the trawl net. The displayed time, when combined with information related to the course and speed of the vessel (which conventionally is plotted during a tow) can be used to determine where the vessel was when the fish were netted.

Preferably the means for generating the control signal is attachable to a trawl net so as to be responsive to sustained deformation of a part of the net as a result of netting a significant quantity of fish.

It is possible to provide a plurality of such devices along a net, arranged to generate respective control signals sequentially as the net is filled, thereby to indicate the times at which several concentrations of fish were located or the rate at which fish are caught and consequently the density of the fish shoal.

In another embodiment, the principles described above of a simple and low-cost solution of utilising delayed information from an inaccessible location are applied in that the net condition monitoring means is an acoustic sensor or transducer attached to the net and which may be activated by a timer to acquire data on the set of the net in its presumed equilibrium state. The elapsed time before activation is set by the timer and the concept of reading the data after hauling the net again applies.

Thus, according to this embodiment of the invention, there is provided a method of determining the condition of fishing net during use in the water, the method comprising utilising a timer, attached to the net and/or its associated gear, to emit a control signal or signals after a time or times defined by the timer; causing said signal or signals to initiate the measuring operation of measuring and storing means attached to the net for the purpose of measuring said condition; and storing the result or results of the measuring operation at said storing means from which the result or results can be obtained after withdrawing the net.

A further embodiment provides equipment for use underwater attached to a fishing net and/or its associated gear and comprising measuring and storing means for measuring a condition of the net and storing the result of the measuring and storing means after a time predetermined by the timer means.

A cost saving over conventional catch control systems is the reduced power requirement of the measuring means (acoustic sensor and transducer), especially important in self-contained units without an umbilical power cable connection with the fishing vessel. Thus, for example, to determine the height of a headrope of a trawl net above the sea bed or the footrope, only a single pulse (or preferably a small number of pulses) is required to sense the dimension. While the power demand of such an acoustic sensor is low, it is desirable that it be reduced to a minimum.

To measure the horizontal spread of the net opening, a transducer fitted to one side of the net gear may fire an acoustic pulse to a sensor in the form of a transponder at a corresponding location on the opposing side of the net gear.

The transponder is then triggered by the pulse to respond with another pulse. Thus the elapsed time between transmission and response can be used to determine the spread.

Preferably the acoustic pulses emitted by the transducer and transponder are encoded so as to be specific to each transducer/transponder combination.

A further option is that the horizontal and spread dimensions be sampled over a period and the results averaged with or without discarding irrelevant data. This latter option may be desirable if the correct orientation of the transducers is difficult to achieve.

The devices for measuring the spread and height of the net opening can be used to check net performance against manufacturers' claims and specifications. Similarly, they can be used to monitor the performance of each discrete element of the gear e.g. trawl doors which act like underwater kites in spreading the warps.

The devices which are the subject of this invention may also be used to activate other environmental data sensors to allow the fisherman to ascertain, at the end of the tow, the conditions at the time of the catch or a preset time interval or intervals after the start of the tow. Such environmental data include water temperature, salinity, acidity (pH), etc.

For a better understanding of the present invention, and to show how the same may be carried into effect, reference will now be made, by way of example, to the accompanying drawings, in which:-

Figure 1 is an axial section through a device for determining whether a net has been filled at least partially with fish;

Figure 2 is a section on line II - II of Figure 1;

Figure 3 is a section on line III - III of Figure 1;

Figure 4 is a section on line IV - IV of Figure 1;

Figure 5 is a section on line V - V of Figure 1;

Figure 6 is an elevation in the direction of arrow VI;

Figure 7 is an elevation in the direction of arrow VII;

Figure 8 is a plan elevation of the device of Figure 1;

Figure 9 shows another form of device, secured to a trawling net;

Figures 10 to 12 are perspective, plan and side views of a net during a bottom water trawl.

Figure 13 is a perspective view of a net during a trawl, partially cut away to show the acoustic sensor in more detail;

Figures 14 to 16 are external plan, side and end elevations of a further net condition monitoring device;

Figure 17 is an axial section through such a device suitable for measuring horizontal spread;

Figures 18 and 19 are section along lines XVIII and IXX respectively of Figure 17;

Figure 20 is an axial section through such a device suitable for measuring vertical spread; and

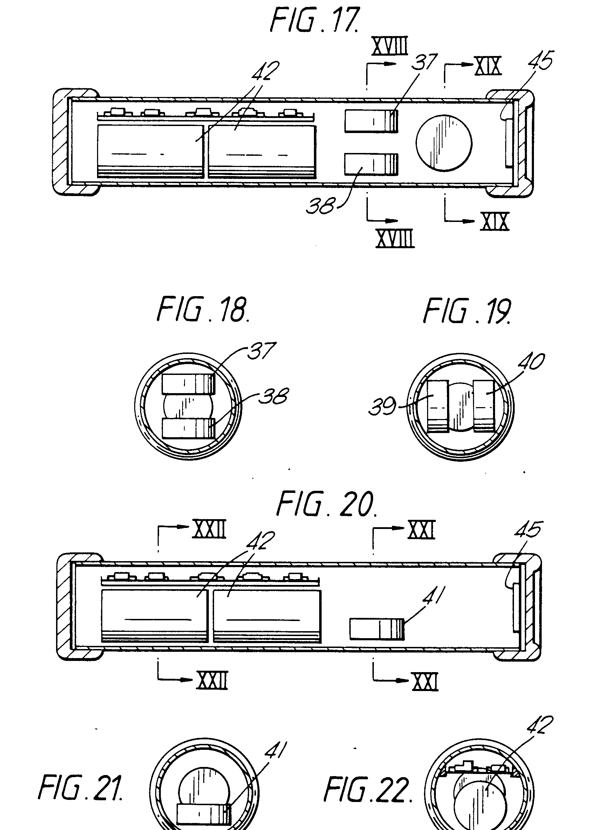

Figures 20 and 21 are sections along lines XX and XXI respectively of Figure 20.

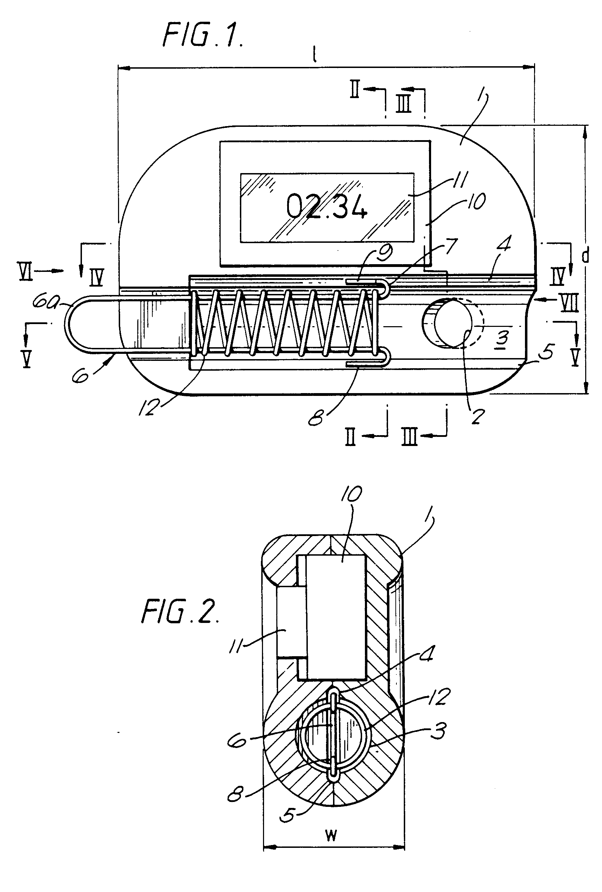

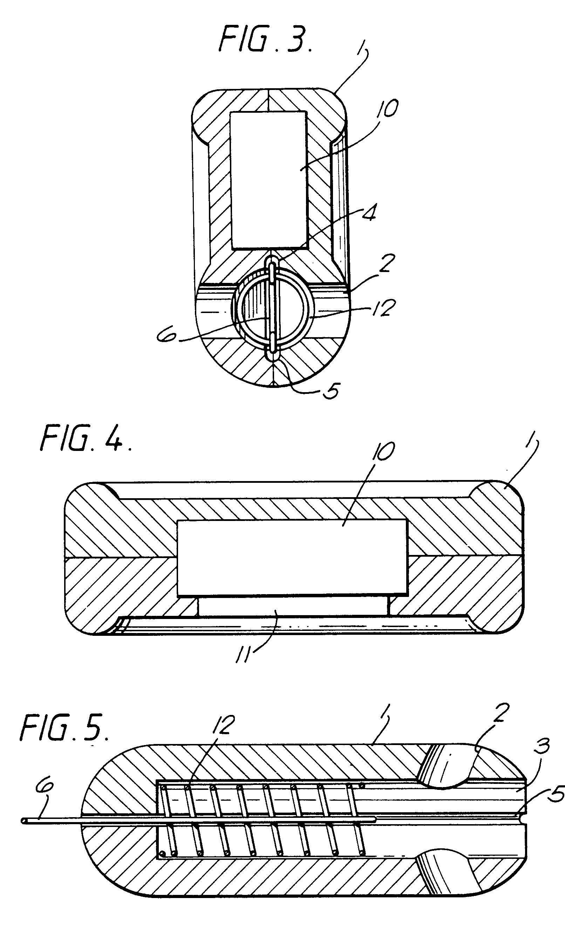

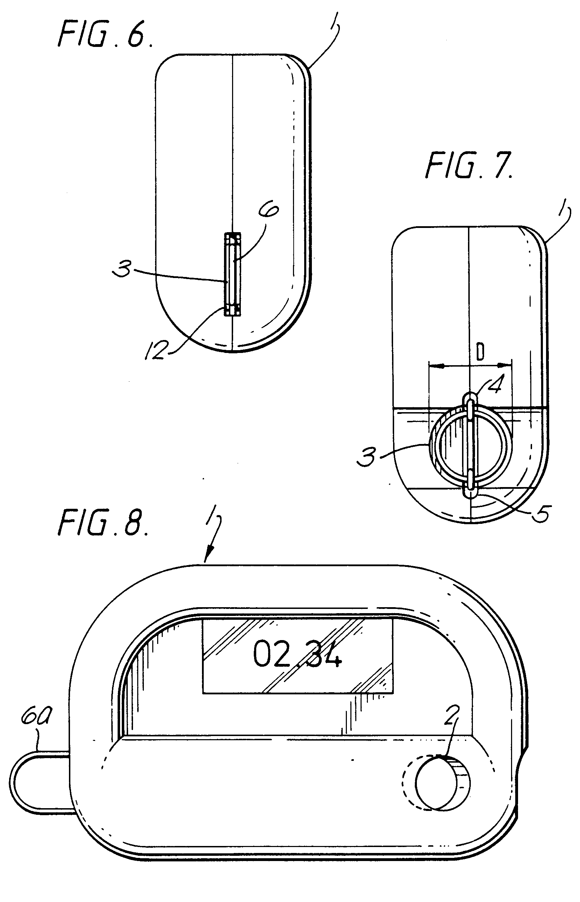

Figures 1 to 8 show a device for attaching to a trawling net to respond to deformation of the net. The device comprises a housing 1 having a curved aperture 2 extending crosswise therethrough for fastening it to a net mesh. The housing of the described embodiment has a length of 120 mm, a width w of 40 mm and a depth d of 77 mm. A passageway 3 extends longitudinally through the housing 1 and is of circular cross-section of diameter D = 21 mm apart from two diametrically extending channels 4, 5 (Figure 2). A feeler element 6 in the form of a wire loop is located by these channels 4, 5, and is movable along the passageway 3. A looped end portion 6a of the feeler element extends from the passageway 3 for attaching to the net mesh. The housing 1 is attached to a square net mesh across its diagonal by means of connecting links (not shown) attached between the looped end portion 6a and the aperture 2 respectively and the mesh nodes. The housing 1 could be attached across several meshes. The connecting links may be rubber strops, chain or rope secured by shackles. In this way, the device can sense deformation of the mesh, for example a change in orientation of the net mesh from square to diagonal.

The feeler element 6 has two arms 7, 8 extending in the form of bent portions within the channels 4.5. One of these arms 7 carries a magnet 9 which cooperates with a switch located in a control box 10 of the housing 1 to activate a timer 11 also located in the control box 10. The switch could have as its actuating device a reed switch, solenoid device or Hall effect device. The feeler element 6 moves against the action of a coil spring 12 arranged coaxially of the passageway 3 and around the feeler element 6. The housing 1 is formed of abrasive resilient polycarbonate ultrasonically welded to opaque plastics. Other devices for sensing net deformation are currently available, for example as manufactured by Simrad (Registered Trade Mark), under the Nos. FA100 Acoustic Catch Indicator and/or FR500 Trawl Eye System. They and the method of their attachment to a net will not be described in further detail herein. Of course, such known devices do not incorporate a timer, merely net deformation sensing means and a transmitter.

With the device secured across the short extent of a diagonal net mesh, deformation of the net due to filling with fish manifests itself in an increase of the width of that extent and hence pulls the feeler element 6 against the action of the spring 12. The spring 12 ensures that only tension over a certain level permits sufficient movement of the magnet 9 to actuate the switch in the control box. The control box includes circuitry for ensuring that only prolonged or sustained deformation (e.g. 20-30 seconds) actuates the switch. This overcomes the difficulties which might otherwise be associated with temporary deformations causing triggering. The timer 11 can be set (and reset), by pulling the feeler element 6 manually, on a "stop watch" principle. That is, the timer 11 has a display for displaying the time and is powered by a battery. The timer 11 is such that actuation of the switch initially causes the timer to reset to zero and start recording the passage of time. A subsequent actuation of the switch stops the timer 11, the recorded time being displayed on the display. A further actuation of the switch resets the displayed time to zero, and causes the timer to recommence time recording from zero, and so on. Alternatively triggering can be by way of metal contacts provided externally of the housing which activate the timer automatically on encountering sea water, or by bringing the device into contact with a magnetic field.

In a preferred operation, the timer is triggered to commence operation by the fisherman stretching the net at the beginning of a trawl. Subsequent filling of the net with a predetermined quantity of fish causes the feeler element 6 to move, and this movement actuates the electrical switch to stop the timer 11. The time at which the timer is stopped is displayed on the display. At the end of the trawl, the net is hauled in and the timer is read so that the time at which that quantity of fish was caught can be ascertained. The timer can then be reset and restarted simultaneously by stretching the net before the beginning of a subsequent trawl. There may be a plurality of devices secured to the net at respective locations in a manner known per se. In one case, there are two devices disposed longitudinally at the distal end of the net and spaced apart by a distance of about half the length of the trawling part of the net.

Another device which may be used to sense the deformation of the net takes the form of a sensing cable 18 manufactured by Raychem under the name Vibretek $5^R$. This cable is capable of providing an electrical output across two electrodes, the output having a potential which varies linearly with applied pressure or strain. This effect is achieved as a result of operation of a piezoelectric polyvinylidene fluoride material. The timer receives the electrical potential via appropriate wires.

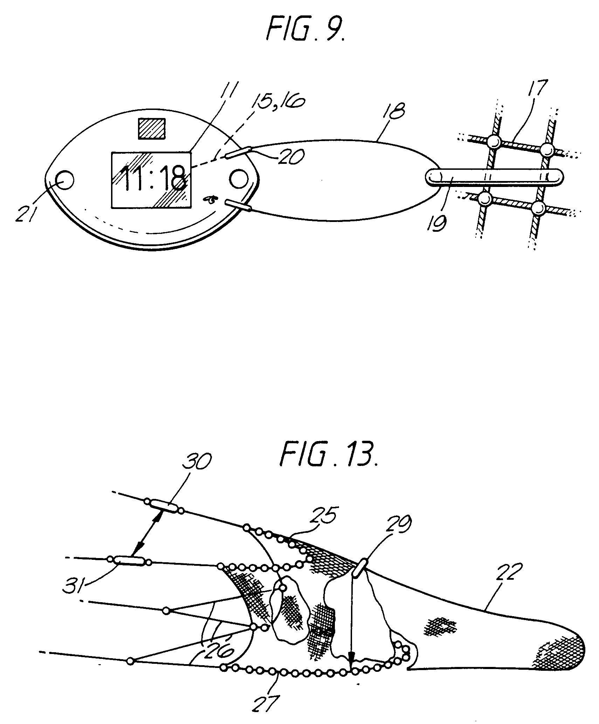

Figure 9 shows how such a device is attached to a net 17 to sense deformation. The cable 18, protected by sleeves 20, is embedded at its end in a block of epoxy resin or polyester containing the timer 11. The wires 15, 16 are connected directly to provide the switching potential for the timer 11 so that it is turned on and off in response to application of the potential in the "stop watch" manner described earlier. The cable 18 defines a loop which is secured to the net 17 by a rubber element 19. The timer 11 is also to be attached to the net 17 by eyelet 21 so that deformation of the net causes the cable to extend. In other respects the device functions as hereinbefore described.

In combination with the chart conventionally plotted during a trawl, the fisherman can quickly see whereabouts he netted the majority of his catch using the displayed time. He can then return directly to that location without having to repeat the whole trawl.

It is also possible to arrange matters so that the timer 11 is reset and started by the switch 1 not at the start of the trawl but by the fish. On withdrawing the net, the timer will still be operating and will display the time elapsed since it was triggered by fish.

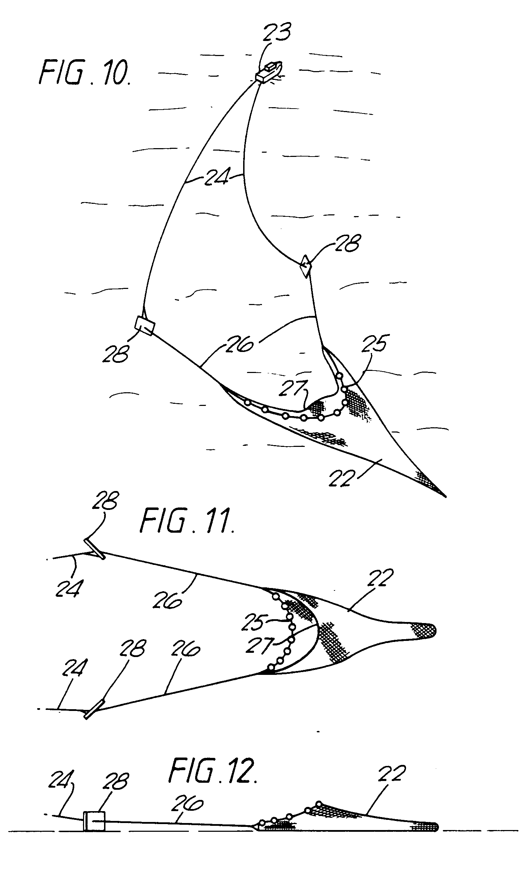

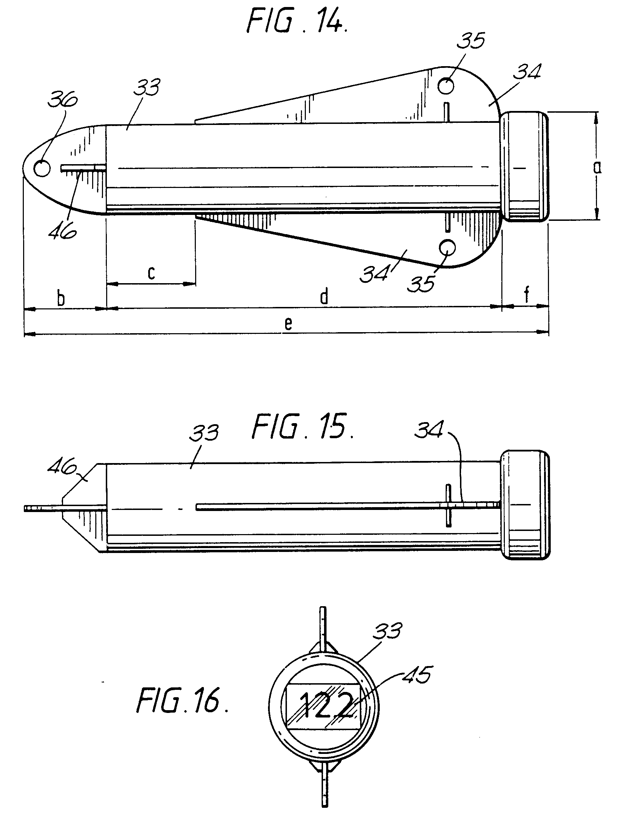

Figures 10 to 13 show a trawl net provided with equipment to measure net set. Net 22 is pulled by a vessel 23 via trawl cables 24, the net having the usual headrope 25, bridle 26, footrope 27 and trawl doors 28. After about, say, one half an hour of use, the net is normally fully open, as shown in Figures 10 and 13. To ensure that it is one needs to know the horizontal spread of the net mouth and also the vertical spread, viz the height of the headrope above the ground. To measure such parameters a set of battery-powered acoustic transducers 29; 30,31 (Figure 13) is used to measure the various distances required. For example, in the case of the horizontal spread, a transponder 31 is used to return a pulse to the opposite transducer 30. In the case of vertical spread, a transducer emits a pulse which is reflected from the sea bed or footrope and no transducer is required. The pulse timings are measured and stored by means within the housings of the transducers so that, on withdrawing the net, the stored data can be read from a display on each housing.

A timer initiates operation of the transducers by sending to them a control signal or signals at a given time after the timer is reset. This resetting can be done by the fisherman or the boat just prior to release of the net. The control signal is transmitted, for example, via conductors or by acoustic signals.

Such net set measuring devices will now be described with reference to Figures 14 to 22. Figures 14 to 16 show the external housing of the devices.

Referring to Figures 14 to 16, the device comprises an elongate housing 33 having "wings" 34 for securing the housing to the head rope or guideline according to whether the device is to be used for measuring the horizontal spread or the vertical spread. Each "wing" has an aperture for this securement 35, the housing having a further aperture 36 at its tip. As can be seen from Figure 16 the device includes a liquid crystal display 45 visible at one end of the housing. At the other end, the housing carries a reinforced portion 46 acting as a stiffener. In Figure 14, the dimensions are as follows: a = 60 mm; b = 35 mm; c = 50 mm; d = 220 mm; e = 281 mm; and f = 26 mm. The display 45 serves to indicate the condition of the net as determined by the transducer/transponder combination at a predetermined time after the trawl has commenced. As described above this time is set by a user according to his individual requirements using a timer in the housing 33 in dependence on the time which the fisherman expects it will take to reach "equilibrium conditions. The timer can be set in accordance with the user's requirements by a dial or "combination lock" arrangement provided in an easily accessible place.

The timer can be triggered by a seawater contact arrangement as referred to above in connection with Figures 1 to 8. Alternatively a housing such as that described in US 4203150 with a rotatable cap could be used.

Referring now to Figures 17 to 19, a device suitable for measuring horizontal spread has four transducers 37 to 40 arranged at 45° intervals within the housing 33.

In this way, the readings taken between transducers can be averaged to give an averaged output reading for display. This overcomes the difficulty of ensuring that the transducers remain perfectly aligned. While four transducers have been described it is clear that two or more appropriately spaced and with appropriate beam widths would suffice.

With the device for measuring vertical spread however this is not so crucial because it is relatively easy to ensure that the single transducer remains pointing vertically downwards. This arrangement is illustrated in Figures 20 to 22 in which the single transducer is designated by reference numeral 41. The transducers may operate at a frequency of 150-200 KHz, and are powered by batteries 42 in the housing 33.

As described above, the depth (or vertical distance) is taken at a time determined by the timer and is stored on the liquid crystal display 38 so that it can be read when the device is retrieved when the net is hauled.

Conventional spread detectors, such as those manufactured by Scanmar (Registered Trade Mark), could be modified for use in the present invention.

## Claims

1. A device for use underwater attached to a trawl net, the device comprising net configuration sensing means (6,9,12) for providing data relating to a value of a net configuration characteristic, time-measuring means (11) for measuring the passage of time, the device being operable such that one of said net configuration data and measured time is stored for access only on subsequent retrieval of the device from the water when the net is hauled, characterised in that the net configuration sensing means is operable to produce a control signal in dependence upon the attainment of a predetermined value of said net configuration characteristic, said control signal being operable to change the state of the time-measuring means (11) so that the time of occurrence of said predetermined value of said net configuration characteristic can be obtained from said device on retrieval.

2. A device as claimed in claim 1, in which the net configuration sensing means (6,9,12) comprises means for generating the control signal when the net is filled to a predetermined extent with fish, and the time-measuring means (11) has means for indicating the time at which the control signal was received.

3. A device as claimed in claim 2 in which the indicating means (11) series to display the time elapsed between generation of the control signal and either commencement or termination of a fishing trawl.

4. A device as claimed in claim 1, 2 or 3, in which the control signal generating means (6,9,12) comprise a magnet (9) movable relative to an actuating device in response to deformation of the net when it is filled with fish.

5. A device for use underwater attached to a trawl net, the device comprising net spread sensing means (6,9,12) for providing data defining a net spread, time-measuring means (11) for measuring the passage of time, the device being operable such that said net spread data is stored for access only on subsequent retrieval of the device from the water when the net is hauled, characterised in that the time-measuring means is operable to produce a control signal in dependence upon the attainment of a predetermined time, said control signal initiating a discrete net spread measuring operation of the sensing means and the storage of data defining the net spread thus measured.

6. A device as claimed in claim 5 in which the spread determining means includes a transducer (30) for emitting a signal on receipt of said control signal and a transponder (31) for receiving said emitted signal and for generating in response thereto a further signal to determine said spread.

7. A device as claimed in claim 5 or 6 wherein the net spread sensing means comprises means for sensing net spread in two dimensions on receipt of the control signal for obtaining as said data two distinct values of spread to store.

8. A device as claimed in claim 5, 6 or 7 and comprising display means at the device for displaying the stored spread determined at said predetermined time.

9. A method of monitoring a fishing trawl, the method comprising utilizing a device comprising net spread sensing means (6,9,12) for providing data defining net spread and time-measuring means for measuring the passage of time, storing said net spread data at the device, and accessing the stored data only on retrieval of the device from the water when the net is hauled, characterised by the time-measuring means producing a control signal in dependence upon the attainment of a predetermined time, said control signal initiating a discrete net spread measuring operation of the sensing means and the storage of data defining the net spread thus measured.

10. A method as claimed in claim 9 and comprising using net spread sensing means in the form of two transmitter/receiver arrangements (29,30,31) for transmitting and receiving distance measuring pulses in two dimensions of the net.

11. A method of monitoring a fishing trawl, the method comprising utilizing a device comprising net configuration sensing means (6,9,12) for providing data relating to value of a net configuration characteristic and time-measuring means for measuring the passage of time, storing one of said net configuration data and measured time at the device, and accessing the stored data only on retrieval of the device from the water when the net is hauled, characterised by the net configuration sensing means producing a control signal in dependence upon the attainment of a predetermined value of said net configuration characteristic, said control signal changing the state of the time-measuring means so that the time of occurrence of said predetermined value of said net configuration can be obtained from said device on retrieval.

12. A method as claimed in claim 11 in which the net configuration sensing means (6,9,12) emits a control signal when the net has been filled to a predetermined extent with fish, whereupon the time-measuring means (11) is caused to display the elapsed time between the beginning of the trawl and emission of the control signal.

13. A method of monitoring a fishing trawl utilizing a device as claimed in any of claims 1 to 8 and comprising: at the beginning of the trawl, casting the net with the device secured thereto into the water; and at the end of the trawl hauling the net to retrieve the device and reading the data stored thereat.

**Revendications**

1. Dispositif pour l'utilisation sous-marine, fixé à un chalut, ce dispositif comportant des moyens (6, 9, 12) de détection de configuration de filet pour délivrer des données concernant une valeur d'une caractéristique de configuration de filet, des moyens de mesure de temps (11) pour mesurer l'écoulement du temps, le dispositif pouvant être utilisé de telle sorte que l'une desdites données de configuration de filet et de mesure de temps soit mémorisée de façon définitive lors du retrait ultérieur du dispositif hors de l'eau lorsque le filet est hissé, caractérisé en ce que les moyens de détection de configuration de filet peuvent être utilisés pour produire un signal de commande en fonction de l'atteinte d'une valeur prédéterminée de ladite caractéristique de configuration de filet, ledit signal de commande pouvant être utilisé pour changer l'état des moyens de mesure du temps (11) de telle sorte que l'instant d'apparition de ladite valeur prédéterminée de ladite caractéristique de configuration de filet puisse être obtenu à partir dudit dispositif lors de son retrait.

2. Dispositif selon la revendication 1, dans lequel les moyens (6, 9, 12) de détection de la configuration de filet comportent des moyens pour générer le signal de commande lorsque le filet est rempli de poissons à un point prédéterminé, et les moyens de mesure du temps (11) possèdent des moyens pour indiquer l'instant auquel le signal de commande a été reçu.

3. Dispositif selon la revendication 2, dans lequel les moyens d'indication (11) font des cycles pour visualiser le temps écoulé entre la génération du signal de commande et le commencement ou la fin d'une action de chalutage.

4. Dispositif selon la revendication 1, 2 ou 3, dans lequel des moyens (6, 9, 12) de génération de signaux de commande comportent un aimant (9) pouvant se déplacer par rapport à un dispositif d'actionnement en réponse à la déformation du filet lorsqu'il est rempli de poissons.

5. Dispositif pour utilisation sous-marine, fixé à un chalut, le dispositif comprenant des moyens (6, 9, 12) de détection d'extension du filet pour délivrer des données définissant une extension du filet, des moyens de mesure du temps (11) pour mesurer l'écoulement du temps, le dispositif pouvant être utilisé de telle sorte que les données d'extension du filet soient mémorisées de façon définitive lors du retrait ultérieur du dispositif hors de l'eau lorsque le filet est hissé, caractérisé en ce que les moyens de mesure du temps sont utilisables pour produire un signal de commande en fonction de l'atteinte d'un temps prédéterminé, ledit signal de commande déclenchant une opération de mesure d'extension du filet discrète des moyens de détection et la mémorisation de données définissant l'extension du filet ainsi mesurée.

6. Dispositif selon la revendication 5, dans lequel les moyens de détermination de l'extension comportent un transducteur (30) pour émettre un signal lors de la réception dudit signal de commande et un répéteur (31) pour recevoir ledit signal émis et pour générer en réponse à celui-ci un autre signal afin de déterminer ladite extension.

7. Dispositif selon la revendication 5 ou 6, dans lequel les moyens de détection de l'extension du filet comportent des moyens pour détecter l'extension du filet en deux dimensions lors de la réception du signal de commande afin d'obtenir pour lesdites données deux valeurs distinctes d'extension à mémoriser.

8. Dispositif selon la revendication 5, 6 ou 7, et comportant des moyens de visualisation au niveau du dispositif pour visualiser l'extension mémorisée, déterminée audit instant prédéterminé.

9. Procédé pour contrôler un chalutage de pêche de poissons, le procédé comportant l'utilisation d'un dispositif comprenant des moyens (6, 9, 12) de détection d'extension de filet afin de délivrer des données définissant l'extension du filet et des données de mesure du temps pour mesurer l'écoulement du temps, pour mémoriser lesdites données d'extension du filet au niveau du dispositif, et pour accéder aux données mémorisées uniquement lors de l'extraction du dispositif hors de l'eau lorsque le filet est hissé, caractérisé par le fait que les moyens de mesure du temps produisent un signal de commande en fonction de l'atteinte d'un temps prédéterminé, ledit signal de commande déclenchant une opération de mesure d'extension du filet discrète des moyens de détection et la mémorisation de données définissant l'extension du filet ainsi mesurée.

10. Procédé selon la revendication 9, comportant l'utilisation de moyens de détection de l'extension du filet sous la forme de deux dispositions d'émetteur/récepteur (29, 30, 31) afin d'émettre et de recevoir des impulsions de mesure de distance en deux dimensions du filet.

11. Procédé pour contrôler un chalutage de pêche de poissons, le procédé comportant l'utilisation d'un dispositif comportant des moyens (6, 9, 12) de détection de configuration du filet, afin de délivrer des données concernant la valeur des caractéristiques de configuration de filet et des moyens de mesure du temps pour mesurer l'écoulement du temps, la mémorisation de l'une desdites données de configuration du filet et de temps mesuré au niveau du dispositif, et pour accéder aux données mémorisées uniquement lors du retrait du dispositif hors de l'eau lorsque le filet est hissé, caractérisé par le fait que les moyens de détection de configuration du filet produisent un signal de commande en fonction de l'atteinte d'une valeur prédéterminée de ladite caractéristique de configuration du filet, ledit signal de commande changeant l'état des moyens de mesure du temps de telle sorte que l'instant d'atteinte de ladite valeur prédéterminée de ladite configuration du filet peut être obtenu à partir dudit dispositif lors du retrait.

12. Procédé selon la revendication 11, dans lequel des moyens (6, 9, 12) de détection de configuration émettent un signal de commande lorsque le filet a été rempli de poissons jusqu'à un point prédéterminé, après quoi on fait visualiser par les moyens de mesure du temps (11) le temps écoulé entre le commencement du chalutage et l'émission du signal de commande.

13. Procédé pour contrôler un chalutage de pêche de poissons, utilisant un dispositif selon l'une quelconque des revendications 1 à 8, et comportant :

au commencement du chalutage, le lancement dans l'eau du filet avec le dispositif fixé à celui-ci ; et,

à la fin du chalutage, le hissage du filet de façon à récupérer le dispositif et à lire les données mémorisées dans celui-ci.

**Patentansprüche**

1. Eine Vorrichtung zur Verwendung unter Wasser, die an einem Schleppnetz befestigt ist, welche Vorrichtung eine Netzkonfigurations-Sensoreinrichtung (6,9,12) zum Liefern von Daten, die zu einem Wert einer Netzkonfigurations-Charakteristik in Beziehung stehen, und eine Zeitmeßeinrichtung (11) zum Messen des Zeitablaufs umfaßt, wobei die Vorrichtung derart betreibbar ist, daß eines von den Netzkonfigurations-Daten und der gemessenen Zeit gespeichert wird für den Zugriff nur beim nachfolgenden Herausziehen der Vorrichtung aus dem Wasser, wenn das Netz eingeholt wird, dadurch gekennzeichnet, daß die Netzkonfigurations-Sensoreinrichtung so betreibbar ist, daß sie in Abhängigkeit vom Erreichen eines vorbestimmten Wertes der Netzkonfigurations-Charakteristik ein Steuersignal erzeugt, welches Steuersignal zur Änderung des Zustandes der Zeitmeßeinrichtung (11) eingesetzt werden kann, so daß der Zeltpunkt des Auftretens des vorbestimmten Wertes der Netzkonfigurations-Charakteristik von der Vorrichtung beim Herausziehen erhalten werden kann.

2. Eine Vorrichtung nach Anspruch 1, in welcher die Netzkonfigurations-Sensoreinrichtung (6,9,12) Mittel zum Erzeugen des Steuersignals, wenn das Netz bis zu einem bestimmten Grad mit Fisch gefüllt ist, umfaßt, und die Zeitmeßeinrichtung (11) Mittel zum Anzeigen des Zeitpunktes, zu dem das Steuersignal empfangen wurde, aufweist.

3. Eine Vorrichtung nach Anspruch 2, in welcher die Anzeigeeinrichtung (11) als Anzeige zum Anzeigen der zwischen der Erzeugung des Steuersignals und entweder dem Beginn oder dem Ende einer Schleppnetz-Fahrt verstrichenen Zeit ausgebildet ist.

4. Eine Vorrichtung nach Anspruch 1, 2 oder 3, in welcher die Steuersignal-Erzeugungseinrichtung (6,9,12) einen Magnet (9) umfaßt, der in Reaktion auf die Verformung des Netzes, wenn es mit Fisch gefüllt wird, relativ zu einer Betätigungsvorrichtung bewegbar ist.

5. Eine Vorrichtung zur Verwendung unter Wasser, die an einem Schleppnetz befestigt ist, welche Vorrichtung eine Netzausbreitungs-Sensoreinrichtung (6,9,12) zum Liefern von Daten, die die Netzausbreitung kennzeichnen, und eine Zeitmeßeinrichtung (11) zum Messen des Zeitablaufs umfaßt, wobei die Vorrichtung derart betreibbar ist, daß die Netzausbreitungs-Daten gespeichert werden für den Zugriff nur beim nachfolgenden Herausziehen der Vorrichtung aus dem Wasser, wenn das Netz eingeholt wird, dadurch gekennzeichnet, daß die Zeitmeßeinrichtung so betreibbar ist, daß sie in Abhängigkeit vom Erreichen eines vorbestimmten Zeitpunktes ein Steuersignal erzeugt, welches Steuersignal einen diskreten Netzausbreitungs-Meßvorgang der Sensoreinrichtung und das Speichern von Daten, die die so gemessene Netzausbreitung kennzeichnen, in Gang setzt.

6. Eine Vorrichtung nach Anspruch 5, in welcher die Netzausbreitungs-Bestimmungseinrichtung einen Sender (30) zum Abgeben eines Signals bei Empfang des Steuersignals und einen Transponder (31) enthält, der dazu vorgesehen ist, das abgegebene Signal zu empfangen und in Reaktion darauf ein weiteres Signal zum Bestimmen der Netzausbreitung zu erzeugen.

7. Eine Vorrichtung nach Anspruch 5 oder 6, in welcher die Netzausbreitungs-Sensoreinrichtung Mittel umfaßt, die dazu vorgesehen sind, bei Empfang des Steuersignals die Netzausbreitung in zwei Dimensionen zu ermitteln, um als Daten zwei einzelne Werte der Netzausbreitung zum Speichern zu erhalten.

8. Eine Vorrichtung nach Anspruch 5, 6 oder 7, mit einer Anzeige-Einrichtung an der Vorrichtung zum Anzeigen der gespeicherten Netzausbreitung, die zum vorbestimmten Zeitpunkt bestimmt wurde.

9. Ein Verfahren zur Überwachung einer Schleppnetzfahrt, welches Verfahren umfaßt: Verwenden einer Vorrichtung mit einer Netzausbreitungs-Sensoreinrichtung (6,9,12) zum Liefern von Daten, die die Netzausbreitung kennzeichnen, und einer Zeitmeßeinrichtung zum Messen des Zeitablaufs, Speichern der Netzausbreitungs-Daten in der Vorrichtung und Zugreifen auf die gespeicherten Daten nur beim Herausziehen der Vorrichtung aus dem Wasser, wenn das Netz eingeholt wird, dadurch gekennzeichnet, daß die Zeitmeßeinrichtung in Abhängigkeit vom Erreichen eines vorbestimmten Zeitpunktes ein Steuersignal erzeugt, welches Steuersignal einen diskreten Netzausbreitungs-Meßvorgang der Sensoreinrichtung und das Speichern von Daten, die die so gemessene Netzausbreitung kennzeichnen, in Gang setzt.

10. Ein Verfahren nach Anspruch 9, das die Verwendung der Netzausbreitungs-Sensoreinrichtung in Form von zwei Sender/ Empfänger-Anordnungen (29,30,31) zum Aussenden und Empfangen von Entfernungs-Meßimpulsen in zwei Dimensionen des Netzes umfaßt.

11. Ein Verfahren zur Überwachung einer Schleppnetzfahrt, welches Verfahren umfaßt: Verwenden einer Vorrichtung mit einer Netzkonfigurations-Sensoreinrichtung (6,9,12) zum Liefern von Daten, die zu einem Wert einer Netzkonfigurations-Charakteristik in Beziehung stehen, und einer Zeitmeßeinrichtung zum Messen des Zeitablaufs, Speichern von einem von Netzkonfigurations-Daten und gemessener Zeit in der Vorrichtung und Zugreifen auf die gespeicherten Daten nur beim Herausziehen der Vorrichtung aus dem Wasser, wenn das Netz eingeholt wird, dadurch gekennzeichnet, daß die Netzkonfigurations-Sensoreinrichtung in Abhängigkeit vom Erreichen eines vorbestimmten Wertes der Netzkonfigurations-Charakteristik ein Steuersignal erzeugt, welches Steuersignal den Zustand der Zeitmeßeinrichtung ändert, so daß der Zeitpunkt des Auftretens des vorbestimmten Wertes der Netzkonfiguration von der Vorrichtung beim Herausziehen erhalten werden kann.

12. Ein Verfahren nach Anspruch 11, in welchem die Netzkonfigurations-Sensoreinrichtung(6,9,12) ein Steuersignal abgibt, wenn das Netz bis zu einem vorbestimmten Grad mit Fisch gefüllt worden ist, woraufhin veranlaßt wird, daß die Zeitmeßeinrichtung (11) die verstrichene Zeit zwischen dem Beginn der Fahrt und der Abgabe des Steuersignals anzeigt.

13. Ein Verfahren zur Überwachung einer Schleppnetzfahrt, das eine Vorrichtung nach wenigstens einem der Ansprüche 1 bis 8 verwendet und umfaßt: Auswerfen des Netzes mit der daran befestigten Vorrichtung bei Beginn der Fahrt in das Wasser und Einholen des Netzes am Ende der Fahrt, um die Vorrichtung herauszuziehen und die darin gespeicherten Daten zu lesen.

FIG.1.

FIG.2.

*FIG . 3.*

*FIG. 4.*

*FIG. 5.*

13

FIG.6.

FIG.7.

FIG.8.

FIG.9.

FIG.13.

FIG. 10.

FIG. 11.

FIG. 12.

FIG . 14.

FIG . 15.

FIG.16.

FIG.17.

FIG.18.

FIG.19.

FIG.20.

FIG.21.

FIG.22.